# EUROPÄISCHE PATENTSCHRIFT

(11) **EP 0 676 136 B1**
(45) Veröffentlichungstag und Bekanntmachung des Hinweises auf die Patenterteilung: **16.12.1998**
(21) Anmeldenummer: 95890072.2
(22) Anmeldetag: 06.04.1995
(51) Int. Cl.: A01K 5/02, B01F 5/10

(54) **Flüssigfütterungsanlage**
Liquid feed dispensing system
Installation de distribution d'aliments liquides

(30) Priorität: 11.04.1994 AT 731/94
(43) Veröffentlichungstag der Anmeldung: 11.10.1995
(73) Patentinhaber: SCHAUER MASCHINENFABRIK GESELLSCHAFT M.B.H. & CO. KG, AT-4731 Prambachkirchen 41 (AT)
(72) Erfinder: Vogl, Gerhard, Dipl.-Ing., A-4070 Eferding (AT)
(74) Vertreter: Hübscher, Heiner, Dipl.-Ing.

(56) Entgegenhaltungen:
- DE-A- 3 316 916
- US-A- 4 340 308
- US-A- 4 671 892

## Beschreibung

Die Erfindung betrifft eine Flüssigfütterungsanlage nach dem Oberbergriff des Patentanspruches 1.

Eine derartige Flüssigfütterungsanlage ist aus der DE-A 33 16 916 bekannt. Bei einer ähnlichen Anlage nach der AT-A 384 928 wird beim Betrieb so vorgegangen, daß für die Zubereitung des Flüssigfutters verwendete Silage in einem eigenen, der Entnahmefräse od.dgl. des Silos nachgeordneten Behälter mit über die Pumpe und eine eigene Leitung aus dem Mischbehälter zugeführter Flüssigkeit aufgeschwemmt und in den Mischbehälter zurückgeleitet wird. Weitere Futterzutaten können über gesonderte Leitungen oder Einwurfförderer direkt in den Mischbehälter eingeworfen werden. Zur Verbesserung der Durchmischung ist nach der DE-A 33 16 916 vorgesehen, das im Mischbehälter befindliche vorgemischte Futter mittels der Pumpe und der zusätzlichen in den Behälter zurückführenden Leitung zu einem oberen Einlaß des Mischbehälters zu fördern und so umzuwälzen. Zur Verbesserung der Mischwirkung ist es auch bekannt, gesonderte, im Mischbehälter angeordnete, antreibbare Rührwerke vorzusehen oder eine in den Behälter eintauchende kombinierte Misch- und Förderpumpe vorzusehen. Diese Ausführungen sind aufwendig, wobei sich bei der Stillsetzung der Anlage bei Fütterungsende und auch dann, wenn nacheinander Futterzubereitungen nach verschiedenen Rezepturen herzustellen sind, Reinigungsprobleme ergeben. Die Praxis zeigt, daß eine Homogenisierung durch Umpumpen besser dadurch erzielt wird, daß das Futter nicht über eine Kurzschlußleitung zurückgeführt, sondern durch die gesamte Förderleitung umgepumpt wird. Bisher ergeben sich bei allen Ausführungen dann Probleme, wenn der Futtermischung aufstaubende oder zur Staubentwicklung neigende Zutaten beigefügt werden müssen. Hier ergeben sich oft relativ lange Mischzeiten und die zwingende Notwendigkeit, die erwähnten, aufwendigen Mischanlagen einzusetzen.

Eine dem Prinzip nach der Konstruktion nach der DE-A 33 16 916 ähnliche Anlage ist aus der GB-2 142 812 für die Zubereitung von vorgewärmtem Milchfutter für Kälber bekannt. Dabei kann sogar über verschiedene Kurzschlußleitungen, die allerdings alle oben im Mischbehälter münden, wahlweise umgepumpt werden. Neben der Homogenisierung des Milchbreies soll durch dieses dauernde Umpumpen, das insbesondere in Abgabepausen an mehrere Verteilerauslässe stattfindet, erreicht werden, daß der Milchbrei ständig über im Mischbehälter vorgesehene Heizeinrichtungen auf der gewünschten Temperatur gehalten und dann möglichst rasch in diesem vorgewärmten Zustand ausgeteilt wird.

Um die Reinigung des Mischbehälters nach einer Futterabgabe zu erleichtern, werden nach der FR-B 2 637 160 im Mischbehälter an drehbaren Auslegern sitzende Sprühdüsen für Reinigungswasser vorgesehen. Im übrigen arbeitet diese Anlage mit außerhalb des Mischbehälters vorgesehenen, in eine Förderleitung abgebenden Kolbenpumpen, die im Tandembetrieb angetrieben werden.

Bei einer sich gattungsmäßig von Flüssigfütterungsanlagen der eingangs genannten Art unterschiedenden Mischanlagen nach der US-A 4 340 308 ist es bekannt, feinstes Kalkpulver in einem Mischbehälter mit Wasser oder einer sonstigen Trägerflüssigkeit zu vermischen, wobei im Mischbehälter stehende Rohre mit Düsenöffnungen angebracht sind, über die zunächst die Trägerflüssigkeit in den Behälter eingebracht und dann nach Zugabe von feinstem Kalkpulver die sich bildende Aufschwemmung aus Kalkpulver und Flüssigkeit zur Homogenisierung umgepumpt wird. Alle Düsen eines Rohres werden gleichzeitig beaufschlagt und es ist daher möglich, die gewünschte Homogenisierung und Rühr- und Umwälzbewegungen im Behälter zu erzeugen. Eine Übertragung der Konstruktion auf Flüssigfütterungsanlagen ist weder vorgesehen noch, wegen der Notwendigkeit, in den Behälter tauchende Rohre mit kleinen Düsenöffnungen, die gleichzeitig beaufschlagt werden, zu verwenden, in irgendeiner Form für Flüssigfütterungsanlagen anwendbar.

Auch eine sich ebenfalls gattungsmäßig von Flüssigfütterungsanlagen unterscheidende Mischanlage nach der US-A 4 671 892 gibt keine Anregungen, wie bei der Aufbereitung von Flüssigfutter vorzugehen wäre. Die Mischanlage dient als Verseifungsanlage und besitzt einen Reaktionsbehälter, der über eine Rohrleitung mit Wasser und den übrigen zu vermischenden bzw. zur Reaktion zu bringenden Zutaten beschickt werden kann, wobei die Anschlußleitung für die Zutaten von oben oder unten in den Behälter geführt wird und durch den gesamten Behälter durchgeht. Innerhalb des Behälters sind oberhalb eines trichterförmigen Bodens Austrittsöffnungen in zwei durch eine Prallscheibe getrennten Gruppen angeordnet, so daß bei der Zuleitung der verschiedenen, grundsätzlich flüssigen Bestandteile und des Wassers eine Durchwirbelung erzielt wird. Ferner können die Zutaten über eine Kurzschlußleitung und eine außerhalb des Behälters in dieser angeordneten Pumpe im Kreislauf geführt werden, wobei sie immer wieder durch die erwähnten Austrittsöffnungen in den Reaktionsbehälter gepreßt werden. Nach vollendeter Reaktion wird die gleiche Pumpe dazu verwendet, um den Inhalt des Reaktionsbehälters in einen Vorratsbehälter umzupumpen.

Aufgabe der Erfindung ist die Schaffung einer Flüssigfütterungsanlage der eingangs genannten Art, bei der mit einfachen Mitteln eine rasche und schonende Zubereitung von Flüssigmischfutter möglich ist, wobei auch aufschwimmende oder zur Staubentwicklung neigende Futterbestandteile unmittelbar ohne Vorbereitung im Mischbehälter untermischt werden können.

Die gestellte Aufgabe wird durch die Merkmale des Patentanspruches 1 gelöst.

Durch gezielte Ansteuerung der einzelnen Düsen lassen sich verschiedene Wirkungen erzielen. Man kann besipielsweise über tiefer gelegene Düsen eine Umwälz- und Rührwirkung auf den Behälterinhalt ausüben, wobei durch Durchpumpen des Behälterinhaltes durch die Düsen eine zusätzliche Homogenisierung erreicht wird. Höher gelegene Düsen können als Sprühdüsen ausgeführt sein, mit deren Hilfe die zugeführten Futterzutaten bzw. aufschwimmende Futterzutaten benetzt werden, wobei es auch möglich ist, die Sprühdüsen gegen den zugeführten Futterstrom aus der Förderleitung bzw. den Auslaß des Zubringerförderers zu richten. Durch Anbringung der Düsen in verschiedenen Anstellwinkeln oder auch durch wahlweise Ansteuerung einzelner Düsen oder Düsengruppen lassen sich Umwälz- und Rührbewegungen des Behälterinhaltes erzeugen. Je nach der Art der für die jeweilige Futtermischung benötigten Futterzutaten wird man empirisch eine eine besonders effektive Mischung dieses Flüssigfutters ergebende Abfolge der Aktivierung der einzelnen Düsen ermitteln und in der Folge bei der Zubereitung des jeweiligen Futters einsetzen.

Eine Weiterbildung der Erfindung ist im Anspruch 2 angegeben. Die Programme können empirisch nach der jeweiligen Futterzubereitung ermittelt werden, wobei für jede Futterzubereitung ein Grundprogramm vorgegeben wird, dessen Ablauf zusätzlich durch die Meßdaten des Füllgewichtes bzw. des Füllstandes beeinfluß werden kann und das die Reihenfolge der Einschaltung der Injektordüsen und die Mischdauer vorgibt.

Weitere Einzelheiten und Vorteile des Erfindungsgegenstandes entnimmt man der nachfolgenden Zeichnungsbeschreibung.

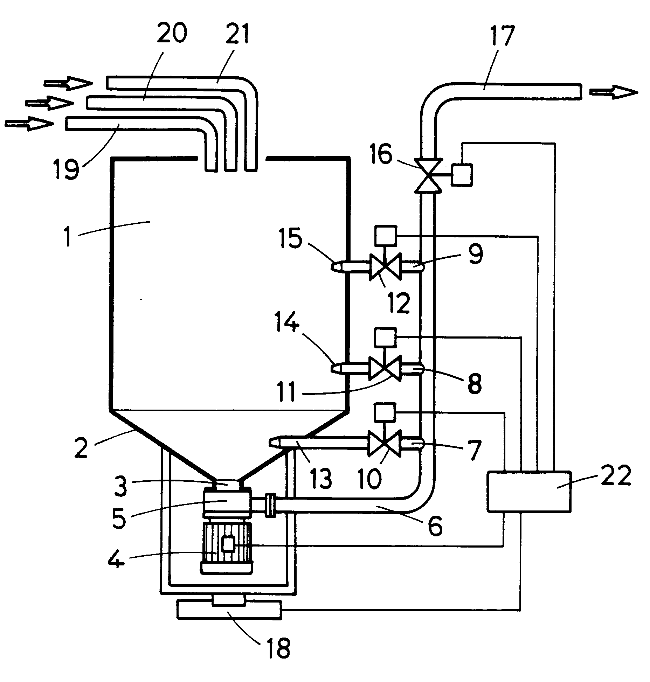

In der Zeichnung ist in rein schematischer Darstellungsweise der den Mischbehälter und die zugehörigen Einrichtungen umfassende Teil einer Flüssigfütterungsanlage veranschaulicht, wobei der Mischbehälter im Schnitt gezeichnet wurde.

Beim Ausführungsbeispiel ist ein in der Grundform zylindrischer Mischbehälter 1 mit sich trichterförmig konisch verjüngendem Boden 2 vorgesehen, wobei an eine Auslaßöffnung 3 des Bodens 2 eine über einen Elektromotor 4 antreibbare Förderpumpe 5 anschließt, die in eine Förderleitung 6 fördert. Diese Förderleitung 6 ist seitlich neben dem Behälter 1 nach oben geführt und mit Abzweigleitungen 7, 8, 9 versehen, in denen elektrisch betätigbare Steuerventile 10, 11, 12 vorgesehen sind, über die im Behälter 1 in verschiedenen Höhen und gegebenenfalls unter verschiedenen Anstellwinkeln mündende Injektordüsen 13, 14 und Sprühdüsen 15 beschickbar sind. Nach dem letzten Abzweig 9 ist in der Leitung 6 ein weiteres Absperrventil 16 vorgesehen. Der an das Absperrventil 16 anschließende Leitungszweig 17 kann als zu Futterauslässen an Abgabestellen im Stall führende, in den Behälter 1 zurückführende Ringleitung ausgeführt sein. Es ist aber auch möglich, die Leitung 17 als Stichleitung zu führen und gegebenenfalls für die Futterförderung nach dem Ventil 16 Druckluft einzublasen. In diesem Fall wird bei der Futterausgabe jeweils eine Futterportion in den Leitungszweig 17 mittels der Pumpe 5 gefördert und dann mit Druckluft zur Abgabestelle geblasen.

Der Behälter 1 ist als Wiegebehälter ausgeführt und demzufulge auf einer Wiegeeinrichtung 18 abgestützt. Schematisch wurden drei Zubringerleitungen 19, 20, 21 angedeutet, über die Flüssigkeit und Futterzutaten zugeführt werden können. Anstelle einer dieser Leitungen kann auch ein Zubringerförderer eingesetzt werden. Auch in den Leitungen 19, 20, 21 können Steuerventile vorhanden sein bzw. bei Verwendung eines Zubringerförderers ist eine Ein-Ausschaltvorrichtung für diesen Förderer vorhanden, so daß die Menge der zugeführten Futterbestandteile in Abhängigkeit von dem über die Wiegeeinrichtung 18 erfaßten Gewicht genau bestimmt werdern kann.

Eine zentrale Steuereinheit 22, die vorzugsweise auch die Beschickung der Futterauslässe entlang der Leitung 17 und die dortige Futterabgabe steuert, betätigt die Ventile 10, 11, 12, 16 sowie die Steuereinrichtungen in den Leitungen 19, 20, 21 und schaltet auch den Pumpenmotor 4. In einem Programmspeicher der Steuereinrichtung 22 sind Steuerprogramme für die Zubereitung verschiedener Futtermischungen und -mengen gespeichert. Nach diesem Programm wird die Zufuhr der Futterzutaten und anschließend die Durchmischung des Futters im Behälter 1 unter entsprechender Ansteuerung der Pumpe 4, der Steuerventile 10 - 12 und des Absperrventiles 16 gesteuert.

## Patentansprüche

1. Flüssigfütterungsanlage, bei der einem über Leitungen (19 - 21) bzw. Zubringerförderer mit Futterzutaten beschickbaren Mischbehälter (1) eine das Flüssigfutter in eine Förderleitung (6), z. B. eine zu Futterausläßen an Abgabestellen und zurück zum Mischbehälter führende Ringleitung (17) fördernde Pumpe (5) nachgeordnet ist, die zusätzlich in einer Mischbetriebsstufe der Anlage betreibbar ist, in der sie über Steuerventile (10 - 12) und zusätzliche, in den Behälter zurückführende Leitungen (7 - 9) den Behälterinhalt umwälzt, dadurch gekennzeichnet, daß die Pumpe (5) in der Mischbetriebsstufe auslaßseitig über die Steuerventile (10 - 12) und Leitungen (7 - 9) mit zwei oder mehreren, im Mischbehälter in verschiedenen Höhen mündenden Düsen (13 - 15) verbindbar ist, über die die ihnen zugeführten Teilmengen des Behälterinhaltes in gegen das im Mischbehälter (1) befindliche Futter bzw. die über die Leitungen oder Zubringerförderer zugeführten Futterzutaten gerichteten Strahlen in den Behälter zurückgefördert werden können.

2. Flüssigfütterungsanlage nach Anspruch 1, dadurch gekennzeichnet, daß eine zentrale Steuereinheit (22) vorgesehen und mit Wiegeeinrichtungen (18) bzw. Füllstandsfühlern des Mischbehälters (1) verbunden ist und daß diese Steuereinheit (22) in der Mischbetriebsstufe die Steuerventile (10-12) und vorzugsweise auch Absperrungen in den Zubringerleitungen (19 - 21) bzw. die Zubringerförderer nach vorgebbaren Programmen ansteuert.

## Claims

1. A liquid feed installation wherein a mixing container (1) supplied with feed additives through pipes (19 - 21) or delivery conveyors is disposed upstream of a pump (6) which delivers the liquid feed to a delivery pipe (6), e.g. a closed-circuit pipe (17) leading to feed outlets at delivery stations and back to the mixing container, the pump also being operable in a mixing-operation stage of the installation in which it circulates the contents of the container through control valves (10 - 12) and additional pipes (7 - 9) leading back to the container, characterised in that in the mixing operation stage the outlet of the pump (5) can be connected via the control valves (10 - 12) and pipes (7 - 9) to two or more nozzles (13 - 15) opening at different heights in the mixing container, which are supplied with portions of the container contents and return them to the container in jets directed against the feed in the mixing container (1) or the feed additives supplied via the pipes or delivery conveyors.

2. A liquid feed installation according to claim 1, characterised in that a central control unit (22) is provided and connected to weighing devices (18) or filling-level sensors of the mixing container (1), and in that in the mixing operation stage the control unit (22) actuates the control valves (10 - 12) and preferably also actuates shut-off means in the delivery pipes (19 - 21) or the delivery conveyors in accordance with presettable programs.

## Revendications

1. Installation d'affouragement liquide, pour laquelle une pompe (5), véhiculant l'aliment liquide dans une conduite de transport (6), par exemple une conduite annulaire (17) menant à des sorties d'aliments en des points de distribution et retournant au récipient de mélange, est disposée en aval d'un récipient de mélange (1) pouvant être garni avec des ingrédients alimentaires par l'intermédiaire de conduites (19 - 21), respectivement de transporteurs d'alimentation, la pompe pouvant en plus fonctionner dans un mode de fonctionnement de mélange de l'installation, dans lequel elle met en circulation le contenu du récipient, par des valves de commande (10 - 12) et des conduites (7 - 9) supplémentaires retournant dans le récipient, caractérisée en ce que, en mode de fonctionnement en mélange, la pompe (5) est susceptible d'être reliée, côté sortie, par les valves de commande (10 - 12) et des commandes (7 - 9) à deux buses (13 - 15) ou plus, débouchant à différents niveaux de hauteur dans le récipient de mélange, buses par l'intermédiaire desquelles les quantités partielles, leur étant amenées, du contenu du réservoir peuvent être retournées à l'intérieur du récipient, en formant des jets orientés contre l'aliment se trouvant dans le récipient de mélange (1), respectivement les additifs d'aliments amenés par les conduites ou les transporteurs d'alimentation.

2. Installation d'affouragement liquide selon la revendication 1, caractérisée en ce qu'une unité de commande centrale (22) est prévue et est reliée à des dispositifs de pesée (18), respectivement des sondes de niveau de remplissage du récipient de mélange (1), et en ce que, dans le mode de fonctionnement en mélange, cette unité de commande (22) commande, selon des programmes susceptibles d'être prédéterminés, les valves de commande (10 - 12) et, de préférence également, les isolements prévus dans les conduites d'alimentateurs (19 - 21), respectivement les transporteurs d'alimentation.
